# EUROPÄISCHE PATENTSCHRIFT

(11) **EP 0 387 692 B1**
(45) Veröffentlichungstag und Bekanntmachung des Hinweises auf die Patenterteilung: **16.07.1997**
(21) Anmeldenummer: 90104403.2
(22) Anmeldetag: 08.03.1990
(51) Int. Cl.: C08L 63/00, C08L 67/00, C08G 59/12, C08G 59/14, C09D 163/00

(54) **Härtbare pulverförmige Mischungen**
Curable powdry mixtures
Mélanges durcissables sous forme de poudre

(30) Priorität: 11.03.1989 DE 3908031; 07.11.1989 DE 3936973
(43) Veröffentlichungstag der Anmeldung: 19.09.1990
(73) Patentinhaber: HOECHST AKTIENGESELLSCHAFT, 65926 Frankfurt am Main (DE)
(72) Erfinder: Marten, Manfred, D-6500 Mainz (DE); Godau, Claus, D-6229 Kiedrich (DE); Walz, Gerd, Dr., D-6200 Wiesbaden (DE)

(56) Entgegenhaltungen:
- DATABASE WPI, Nr. 78-59799A, Derwent Publications Ltd, London, GB; & JP-A-53 80 429 (KANSAI PAINT) 15-07-1978

## Beschreibung

Pulverlacke werden u.a. zum Beschichten von Metallmöbeln, wie Campingartikeln, Kühlschränken, Gartenmöbeln, Regalen sowie zum Lackieren von Kleingegenständen und kompliziert geformten Werkstücken, von Fahrrädern, Nähmaschinen und anderen Metallgegenständen verwendet. Größtenteils werden dabei metallische Gegenstände lackiert, aber auch beispielsweise Kunststoffe sind mit der Pulverlacktechnologie lackierbar.

Gegenüber anderen Lackverfahren hat die Pulverlacktechnologie eine Reihe von Vorteilen. So arbeitet das Lackierverfahren lösungsmittelfrei und damit umweltfreundlich und kostengünstiger. Auch hinsichtlich der Entsorgung, Arbeitssicherheit (Abwesenheit brennbarer Lösungsmittel), Arbeitshygiene und des Umweltschutzes ist das Verfahren vorteilhaft. Darüberhinaus entfallen die Antrocknungszeiten der Lackschichten. Der lackierte Gegenstand wird direkt zum Einbrennofen befördert, wodurch der Zeitaufwand für den gesamten Lackiervorgang reduziert wird.

Die Pulverlack-Technologie basiert auf dem Prinzip der elektrostatischen Aufladung. Zum Aufbringen einer elektrostatischen Ladung ist z.B. das Corona-Verfahren geeignet, wonach der Pulverlack bzw. das Pulver an einer geladenen Corona vorbeigeführt und dabei aufgeladen wird. Weiterhin ist hier das triboelektrische oder elektrokinetische Verfahren zu nennen, die nach dem Prinzip der Reibungselektrizität arbeiten.

Als Pulverlackharze werden typischerweise Epoxidharze, carboxyl- und hydroxylgruppenhaltige Polyesterharze und Acrylharze zusammen mit den entsprechenden Härtern eingesetzt. Auch Kombinationen von Harzen finden Verwendung, wie beispielsweise Mischungen von Epoxidharzen mit carboxylgruppenhaltigen Polyesterharzen.

Bei der Verarbeitung solcher Hybridsysteme kann es, insbesondere bei Weißlacken, durch eine zu hohe Temperatur, durch zu lange Laufzeiten bzw. durch Verzögerungen und Betriebsstörungen beim Einbrennvorgang zu einer Vergilbung der Lackbeschichtungen kommen. Dies führt zu unerwünschtem Produktionsausschuß der lackierten Werkstücke und Gegenstände und ist häufig mit hohen Kosten verbunden. Pulverlackierte Werkstücke und Gegenstände, die intensiver Sonneneinstrahlung ausgesetzt sind, neigen ebenfalls, insbesondere durch den UV-Anteil, zur Vergilbung der Lackschicht.

In der Japanischen Offenlegungsschrift 50-41999 (Nitto Denki Kogyo K.K.) wird die Herstellung eines Epoxypolymers aus einem Epoxyharz, bei dem mindestens zwei Glycidylgruppen in einem Molekül enthalten sind, und einer aromatischen Dicarbonsäure beschrieben. Dabei werden 0,2 bis 0,8 Äquivalent Säure pro Epoxy-Äquivalent in Gegenwart von 0,001 bis 5 Gew.-% Triphenylphosphin, bezogen auf das Gesamtgewicht der betreffenden Dicarbonsäure und des betreffenden Epoxyharzes, unter Erhitzung zur Polymerisation gebracht. Als Härtungsmittel für solche Reaktionsprodukte wird Hexahydrophthalsäureanhydrid beschrieben.

Derartige Pulverlacke besitzen u.a. den Nachteil, daß die mechanischen Eigenschaften, die Reaktivität und/oder die Vergilbungsbeständigkeit für eine Reihe von Anwendungen nicht ausreichen.

In der japanischen Offenlegungsschrift JP-A 53-080 429 wird eine Polyesterharz-Zusammensetzung beschrieben aus einem Carboxylgruppen-haltigen Polyester und einer Verbindung, die durch Umsetzung einer Carbonsäure mit Triglycidylisocyanurat erhalten wird.

Es wurde nun gefunden, daß härtbare pulverförmige Mischungen aus Carboxylgruppen enthaltenden Polyestern und vorstehend beschriebenen Epoxyverbindungen diese Nachteile nicht aufweisen und insbesondere hervorragend gilbungsbeständig sind.

Die vorliegende Erfindung betrifft daher härtbare, pulverförmige Mischungen aus
A) Carboxylgruppen enthaltenden Polyestern,
B) Verbindungen, die mindestens zwei 1,2-Epoxidgruppen enthalten, die Umsetzungsprodukte sind aus
   B1) Verbindungen, die mindestens zwei 1,2-Epoxidgruppen im Molekül enthalten, die ausgewählt sind aus Polyglycidyläthern von mehrwertigen Alkoholen, Polyepoxidverbindungen auf Basis mehrwertiger Phenole und Polyglycidylestern von Polycarbonsäuren mit mindestens zwei Carboxylgruppen, wobei die Carboxylgruppen der Polycarbonsäuren mit einem linearen oder verzweigten, gesättigten oder ungesättigten Kohlenwasserstoffrest mit bis zu 40 Kohlenstoffatomen verbunden sind, und deren Epoxidäquivalentmassen zwischen 160 und 600 g/mol liegt,
   B2) aromatischen Dicarbonsäuren oder deren Mischung mit Verbindungen aus der Gruppe (cyclo)aliphatische Dicarbonsäuren, Monocarbonsäuren und einwertigen Phenolen, und
   B3) gegebenenfalls cyclischen Anhydriden sowie
C) gegebenenfalls weiteren Zusätzen.

Die Komponenten A) und B) liegen in der erfindungsgemäßen Mischung im allgemeinen in solchen Mengen vor, daß das Äquivalentverhältnis von Carboxylgruppen in A) zu Epoxid-und Hydroxylgruppen in B) 0,7 bis 1,3, vorzugsweise 0,9 bis 1,1 beträgt. Zumeist wird hierfür die Menge an Komponente A) bei 50 bis 90 Gew.-%, vorzugsweise bei 65 bis 85 Gew.-%, bezogen auf die Summe aus A) und B) liegen. Auf diese Weise wird in der Regel eine ausreichende Vernetzungsdichte erhalten.

Die Komponente A) besitzt zumeist eine Säurezahl von 15 bis 150, vorzugsweise 30 bis 100 mg KOH/g und eine Glasübergangstemperatur von mindestens 35°C, vorzugsweise mindestens 40 bis 60°C. Die Molmasse Mₙ (Zahlenmittel; bestimmt durch Gelchromatographie, Polystyrol-Standard) liegt in der Regel zwischen 600 und 12000, vorzugsweise 2000 und 8000 g/mol. Vorzugsweise sind die Carboxylgruppen endständig an den Molekülketten angeordnet, die linear oder verzweigt sein können. Im allgemeinen bestehen die Endgruppen von A) zu über 70 Gew.-%, vorzugsweise zu über 90 Gew.-%, aus Carboxylgruppen, wobei die Kettenenden überwiegend durchschnittlich 2 und mehr Carboxylgruppen, teilweise als Carbonsäureanhydridgruppen vorliegend, aufweisen.

Die Schmelzviskositäten bei 200°C der Komponente A) liegen im allgemeinen zwischen 1000 und 8000, vorzugsweise zwischen 2000 und 6000 mPas.

Die Herstellung der Komponente A) erfolgt bekannter Weise in einem Einstufenverfahren oder bevorzugt in einem Zweistufenverfahren wie beispielsweise in der DE-OS 2 163 962 beschrieben durch Reaktion von geeigneten Polyolen A1) mit geeigneten Polycarbonsäuren oder deren Derivaten, insbesondere Anhydriden A2). Die Komponente A2) wird dabei im Überschuß eingesetzt. In der Regel ist das Mengenverhältnis von A1) und A2) so, daß das Äquivalentverhältnis von Hydroxyl- zu Säure- bzw. Anhydridgruppen 1 zu 3 bis 1 zu 1,1, vorzugsweise 1 zu 2,2 bis 1 zu 1,8 beträgt.

Als Komponente A1) kommen zweckmäßigerweise solche Verbindungen in Frage, die Hydroxylzahlen im Bereich 10 bis 80, vorzugsweise von 15 bis 40 besitzen und zahlenmittlere Molmassen Mn (gelchromatographisch bestimmt) von 600 bis 10000, vorzugsweise von 2000 bis 8000 g/mol sowie Erweichungspunkte von 35 bis 110°C, vorzugsweise von 40 bis 90°C (bestimmt durch Differentialthermoanalyse) aufweisen. Genannt seien hier beispielsweise OH-gruppenhaltige Polyester, Polyether, Polythioether, Polyacetale, Polycarbonate und Polyesteramide. Die Polyester, die linear oder verzweigt sein können, sind dabei bevorzugt.

Solche Hydroxylgruppen tragenden Polyester sind z.B Umsetzungsprodukte von mehrwertigen, vorzugsweise zweiwertigen und gegebenenfalls zusätzlich dreiwertigen Alkoholen, mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von einwertigen Alkoholen mit 1 bis 6 C-Atomen oder deren Gemische zur Herstellung der Polyester verwendet werden. Die Reaktion kann auch in Gegenwart von üblichen Veresterungskatalysatoren durchgeführt werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiel für solche Carbonsäuren und deren Derivate seien genannt: Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure;
Terephthalsäuredimethylester und Terephthalsäure-bisglykolester.

Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bishydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Auch Polyester aus Lactonen, z.B. ε-Caprolacton, oder aus Hydroxycarbonsäuren, z.B. w-Hydroxycapronsäure, sind einsetzbar.

Beispiele für die Komponente A2) sind hier insbesondere Trimellithsäureanhydrid (TMSA) sowie Pyromellithsäureanhydrid oder Maleinsäureanhydrid-Addukte z.B. an Piperylen, zu nennen.

Weitere erfindungsgemäß geeignete, carboxylgruppenhaltige Polyester A) sind beispielsweise in der DE-Patentschrift 3 618 355 sowie in den DE-Offenlegungsschriften 2 163 962 und 2 618 729 beschrieben.

Die erfindungsgemäß eingesetzten Epoxidverbindungen B) enthalten im Durchschnitt mindestens 2 Epoxidgruppen pro Molekül. Die Epoxidäquivalentmasse liegt im allgemeinen zwischen 300 und 1200, vorzugsweise zwischen 400 und 800 und insbesondere zwischen 450 und 700 g/mol, während die Säurezahl zumeist 0,01 bis 20, vorzugsweise 0,01 bis 2 mg KOH/g beträgt. Weiterhin besitzen die Epoxide B) mittlere Molmassen Mₙ (Zahlenmittel; bestimmt durch Gelchromatographie) von 500 bis 10000, vorzugsweise von 800 bis 3000 g/mol. Je nach Ausgangskomponenten B1), B2) und ggf. B3) und deren Molverhältnis sowie der Molmasse von B) handelt es sich bei diesen Epoxidverbindungen um feste Produkte mit Glastemperaturen (Tg) von mindestens 20°C, vorzugsweise von mindestens 35 bis 60°C.

Die Herstellung der Epoxidverbindungen B) erfolgt in bekannter Weise durch Umsetzung der Verbindungen B1) mit den Säuren oder den Säuregemischen gemäß B2), z.B. durch mehrstündiges Erhitzen der Komponenten unter Ausschluß von Sauerstoff auf Temperaturen von 100 bis 250°C, vorzugsweise 140 bis 180°C, zweckmäßigerweise in Gegenwart eines Katalysators.

Bei Mitverwendung der Komponente B3) wird die Herstellung in der Regel in zwei Stufen durchgeführt. Hierzu wird in der ersten Stufe zunächst wie vorstehend beschrieben verfahren, wobei im allgemeinen ein Produkt mit Säurezahlen von kleiner als 20 mg KOH/g, vorzugsweise kleiner als 2 mg KOH/g angestrebt wird. Danach wird in einer zweiten Stufe das Reaktionsprodukt von B1) und B2) mit dem cyclischen Anhydrid B3) durch mehrstündiges Erhitzen der Komponenten unter Ausschluß von Sauerstoff auf Temperaturen von 100-200°C, vorzugsweise 120-160°C bis zum Erreichen einer Säurezahl von kleiner als 5 mg KOH/g, vorzugsweise kleiner als 2 mg KOH/g, umgesetzt.

Die erfindungsgemäß als Komponente B1) eingesetzten 1,2-Epoxidverbindungen haben im Mittel mindestens zwei 1,2-Epoxidgruppen pro Molekül, stellen also Polyepoxidverbindungen dar, und haben in der Regel eine Glastemperatur von mindestens 10°C.

Polyepoxidverbindungen B1) auf Basis mehrwertiger Phenole sind beispielsweise aus Resorcin, Hydrochinon, aus 4,4'-Dihydroxydiphenylmethan, aus Isomerengemischen des Dihydroxydiphenylmethans (Bisphenol F), aus 4,4'-Dihydroxy-3,3'-dimethyl-diphenylmethan, aus 4,4'-Dihydroxy-diphenyldimethylmethan (Bisphenol A), aus 4,4'-Dihydroxydiphenylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus 4,4'-Dihydroxybenzophenon, Bis-(4-hydroxyphenyl)-1,1-isobutan, Bis-(4-hydroxy-tert.-butylphenylj-2,2-propan, Bis-(2-hydroxynaphthyl)-methan, 1,5-Dihydroxynaphthalin, Bis-(4-hydroxyphenyl-)ether; ferner aus den Hydrierungs-, Chlorierungs- und Bromierungsprodukten der vorstehend genannten Verbindungen, aus Novolaken (d.h. aus Umsetzungsprodukten von ein- oder mehrwertigen Phenolen mit Aldehyden, insbesondere Formaldehyd in Gegenwart saurer Katalysatoren) erhältlich.

Auch die Polyglycidylether von mehrwertigen Alkoholen sind als B1) geeignet. Als Beispiele derartiger mehrwertiger Alkohole seien Trimethylolpropan und Bis-(4-hydroxycylohexyl)-2,2-propan genannt.

Weiter kommen als B1) Verbindungen wie (Poly)glycidylester der Formel 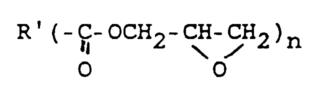 in Frage, in denen R' ein linearer oder verzweigter, gesättigter oder ungesättigter Kohlenwasserstoffrest mit bis zu 40, vorzugsweise bis zu 10 Kohlenstoffatomen oder ein gegebenenfalls substituierter Phenylrest ist und n mindestens 2, vorzugsweise 2 bis 5 bedeutet. Solche Polyglycidylester von Polycarbonsäuren erhält man durch die Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Terephthalsäure, Hexahydrophthalsäure, 2,6-Naphthalindicarbonsäure und dimerisierte Fettsäuren. Beispiele hierfür sind Terephthalsäurediglycidylester und Hexahydrophthalsäurediglycidylester.

Diese Polyepoxidverbindungen können auch in Mischung untereinander sowie ggf. auch in Mischung mit Monoepoxiden eingesetzt werden, wobei zu beachten ist, daß die Mischung der 1,2-Epoxidverbindungen eine Glastemperatur von mindestens 10°C besitzt. Verwendet man in der Mischung 1,2-Epoxidverbindungen mit niedrigeren Glastemperaturen, so können diese nur zu einem geringen Anteil und nur in Kombination mit entsprechend hochschmelzenden 1,2-Epoxidverbindungen eingesetzt werden, damit die Glastemperatur der Komponente B) mindestens 10°C beträgt.

Als Monoepoxide sind beispielsweise geeignet: epoxidierte einfach-ungesättigte Kohlenwasserstoffe (Butylen-, Cyclohexen-, Styroloxid), halogenhaltige Epoxide, wie z.B. Epichlorhydrin; Epoxidether einwertiger Alkohole (Methyl-, Ethyl-, Butyl-, 2-Ethylhexyl-, Dodecylalkohol); Epoxidether einwertiger Phenole (Phenol, Kresol sowie andere in o- oder p-Stellung substituierte Phenole); Glycidylester ungesättigter Carbonsäuren, epoxidierte Ester von ungesättigten Alkoholen bzw. ungesättigten Carbonsäuren sowie die Acetale des Glycidaldehyds.

Weitere Epoxidverbindungen mit geeigneten Aufschmelzpunkten sind in dem Handbuch "Epoxidverbindungen und Epoxidharze" von A.M. Paquin, Springer Verlag, Berlin 1958, Kapitel IV, in Lee, Neville "Handbook of Epoxy Resins", 1967, Chapter 2 und in Wagner/Sarx, "Lackkunstharze", Carl Hanser Verlag (1971), S. 174 ff beschrieben.

Bevorzugte Epoxyverbindungen B1) sind:
- Poly-(Epoxyalkyl)-Äther aliphatischer oder cycloaliphatischer Polyhydroxyverbindungen, wie des Trimethyloläthans, Trimethylolpropans, Tris(hydroxyäthyl)-isocyanurats, Pentaerythrits;
- Umsetzungsprodukte von Epihalogenhydrinen, wie Epichlorhydrin mit monomeren mehrwertigen Phenolen wie 2,2-Bis(4-Hydroxyphenyl)-propan, 1,1-Bis(4-Hydroxyphenyl)-äthan, Bis(4-Hydroxyphenyl)-methan, 4,4'-Dihydroxydiphenylsulfon, Hydrochinon, Resorcin, Dihydroxydiphenyl, Dihydroxynaphthalin.
- Glycidyläther von mehrwertigen phenolischen Verbindungen wie Novolaken und Resolen, gewonnen aus der Kondensation des Phenols und/oder der Kresole mit Formaldehyd;
- Polyglycidylester von Polycarbonsäuren wie Diglycidylester der Phthalsäure, Isophthalsäure, Terephthalsäure, Tetrahydrophthalsäure, Hexahydrophthalsäure, aus Polyestern abgeleitete Polyglycidylester oder auch Verbindungen mit freien Carbonsäuregruppen.

Besonders bevorzugt werden als B1) Epoxidharze auf Basis von Bisphenol A und Epichlorhydrin mit Epoxidäquivalentmassen im Bereich von 160-600, vorzugsweise 160-200 g/mol, verwendet.

Die Verbindungen B2) stellen aromatische Dicarbonsäuren oder Mischungen dieser aromatischen Dicarbonsäuren mit (cyclo)aliphatischen Dicarbonsäuren, Monocarbonsäuren und/oder einwertigen Phenolen dar.

Als aromat. Dicarbonsäuren werden z.B. verwendet: Terephthalsäure, Isophthalsäure, o-Phthalsäure oder verschiedene Naphthalin-dicarbonsäuren, beispielsweise 2,6-Naphthalindicarbonsäure. Besonders bevorzugt ist dabei Terephthalsäure. Es können auch Gemische der aromatischen Dicarbonsäuren eingesetzt werden.

Weitere geeignete aromatische Carbonsäuren sind solche des Typs 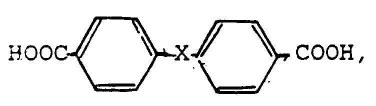 wobei X für eine chemische Bindung, für Alkylenreste mit 1 bis 6 C-Atomen, für 0 oder für CO steht.

Der Begriff "(cyclo)aliphatische" Dicarbonsäuren soll entsprechende aliphatische oder cycloaliphatische Säuren sowie deren Gemische umfassen.

Als aliphatische Dicarbonsäuren, deren aliphatischer Rest im allgemeinen 1 bis 20, vorzugsweise 2 bis 12 C-Atome enthält, seien beispielsweise Bernsteinsäure, Glutarsäure, Adipinsäure, Korksäure, Azelainsäure, Sebacinsäure und Dodecandisäure genannt.

Geeignete cycloaliphatische Carbonsäuren, deren cycloaliphatischer Rest zumeist 5 bis 12, vorzugsweise 6 bis 8 C-Atome umfaßt, sind z.B. die verschiedenen Cyclohexandicarbonsäure-Isomeren, Hexahydrophthalsäure und Tetrahydrophthalsäure.

Geeignete Monocarbonsäuren, deren C-Zahl im allgemeinen 3 bis 20, vorzugsweise 3 bis 12 beträgt, sind z. B.: Benzoesäure, α- bzw. β-Naphthoesäure, o,m,p-Toluylsäure, Anissäure, Veratrumsäure; weiterhin verzweigte oder unverzweigte aliphatische Monocarbonsäuren, wie z.B. Essigsäure, Propionsäure, Buttersäure, Laurinsäure, Stearinsäure, Isooctansäure, Isononansäure, oder Hydroxymonocarbonsäuren, wie Glycolsäure, Milchsäure, Dimethylolpropionsäure.

Die einwertigen Phenole können ein- oder mehrkernig sein. Beispielsweise seien hier genannt: Phenol, o, m, p-Kresol, Xylenole, Guajakol, Thymol, Carvacrol, α- oder ß-Naphthol, p-t-Butylphenol.

Falls die Komponente B2) eine Mischung aus aromatischer Dicarbonsäure mit (cyclo)aliphatischen Dicarbonsäuren, Monocarbonsäuren und/oder aromatischen Alkoholen darstellt, so beträgt die Menge dieser neben der aromatischen Dicarbonsäure vorhandenen Bestandteile zumeist 0,1 bis 20 Gew.-%, vorzugsweise 1 bis 5 Gew.-%, bezogen auf aromatische Dicarbonsäure.

Die Komponenten B1) und B2) werden üblicherweise in solchen Mengen eingesetzt, daß das Äquivalentverhältnis Epoxid- zu Carboxylgruppen 6 : 5 bis 2 : 1, vorzugsweise 3 : 2 bis 2 : 1 beträgt. Bei Mitverwendung von B3) werden pro Mol Reaktionsprodukt aus B1) und B2) im allgemeinen 0,01-1 Mol, vorzugsweise 0,1-0,4 Mol cyclisches Anhydrid B3) verwendet.

Als cyclische Polycarbonsäureanhydrid B3) kommen zweckmäßigerweise solche in Frage, die 4 bis 20, vorzugsweise 4 bis 10 C-Atome aufweisen, und die gegebenenfalls noch Substituenten, wie Halogen, insbesondere Chlor, sowie Carboxylgruppen tragen können. Sie können sich vom (cyclo)-aliphatischen, olefinisch ungesättigten oder aromatischen Polycarbonsäuren ableiten. Beispielsweise seien hier genannt:
Bernsteinsäureanhydrid, Alkenylbernsteinsäureanhydride wie z.B. Dodecenylbernsteinsäureanhydrid, Glutarsäureanhydrid, Maleinsäureanhydrid, Citraconsäureanhydrid (Methylmaleinsäureanhydrid), Dichlormaleinsäureanhydrid, Aconitsäureanhydrid (1-Propen-1,2,3-tricarbonsäure-1,2-anhydrid), Tricarballylsäureanhydrid (Propan-1,2,3-tricarbonsäureanhydrid), Itaconsäureanhydrid (Methylenbernsteinsäureanhydrid), Cyclopentan-tetracarbonsäuredianhydrid, Δ⁴-Tetrahydrophthalsäureanhydrid, 4-Methyl-Δ⁴-tetrahydrophthalsäureanhydrid, Hexahydrophthalsäureanhydrid, 4-Methyl-hexahydrophthalsäureanhydrid, 3,6-Endomethylen-Δ⁴-tetrahydrophthalsäureanhydrid (= Nadicanhydrid), 4-Methyl-3,6-endomethylen-Δ⁴-tetrahydrophthalsäureanhydrid (= Methylnadicanhydrid); 3,4,5,6,7,7-Hexachlor-3,6-endomethylen-tetrahydrophthalsäureanhydrid (= Chlorendicsäureanhydrid), das Diels-Alder Addukt aus 2 Mol Maleinsäureanhydrid und 1 Mol 1,4-Bis-(cyclopentadienyl)-2-buten oder Diels-Alder-Addukte aus Maleinsäureanhydrid und konjungiert ungesättigten Fettsäuren, wie 2,4-Hexadiensäure (Sorbinsäure), 9,11-Octadecadiensäure (Ricinensäure), 9,11,13-Octadecatriensäure (Eleostearinsäure), 9,11,13,14-Octadecatetraensäure, ferner aromatische Polycarbonsäureanhydride, wie Phthalsäureanhydrid, Trimellitsäureanhydrid, Pyromellitsäuredianhydrid oder Benzophenontetracarbonsäuredianhydrid. Man kann aber auch andere carboxycyclische Ringe enthaltende cyclische Anhydride von Polycarbonsäuren verwenden, deren Carboxylgruppen sich an verschiedenen, ggf. anelliierten Ringen befinden, wie beispielsweise 1,8-Naphthalindicarbonsäureanhydrid.

Besonders bevorzugt sind Bernsteinsäureanhydrid, Phthalsäureanhydrid und die durch Diels-Alder-Addition aus billigen petrochemischen Rohstoffen zugänglichen cycloaliphatischen Dicarbonsäureanhydride, wie z.B. Δ⁴-Tetrahydrophthalsäureanhydrid oder Hexahydrophthalsäureanhydrid.

Für die gezielte und beschleunigte Umsetzung der Carboxylgruppen der Komponente B2) und der Epoxidgruppen der Komponente B1) können als Katalysatoren beispielsweise eingesetzt werden: Natriumhydroxid, Kaliumhydroxid, Lithiumhydroxid, Natriumcarbonat, Chromverbindungen wie CrCl₃, CrO₃, Chromacetylacetonat, Imidazole, quaternäre Ammonium- und Phosphoniumverbindungen wie Benzyltrimethylammoniumchlorid, Tetraethylammoniumchlorid, Tetramethylammoniumchlorid, Benzyltrimethylammoniumhydroxid, Benzyldodecyldimethylammoniumchlorid, Methyltriphenylphosphoniumjodid, Triphenyl-(2,5-dihydroxyphenyl)-phosphoniumhydroxid, Ethyltriphenylphosphoniumacetat, Triphenylethylphosphoniumbromid sowie organ. Phosphine wie Triphenylphosphin, Tricyclohexylphosphin, Tributylphosphin, Cyclohexyloctylphosphin, weiterhin aromatische Amine, wie N,N-Dimethylanilin, N,N-Diethylanilin, N,N-Dimethyl-p-toluidin, N,N-Diethyl-p-toluidin, sowie Amine wie Triethylamin, Tributylamin, Benzyldimethylamin, Benzyldiethylamin, Triethylendiamin, N-Methylmorpholin, N-Methyl-piperidin, N-Alkylamine wie z.B. n-Butylamin, und Alkanolamine wie Diethanolamin, Dimethylethanolamin, Diethylethanolamin, Dibutylethanolamin, Methyldiethanolamin, Di(3-phenoxy-2-hydroxy-propylalkylamine, wie z.B. Di-(3-phenoxy-2-hydroxy-propyl)-n-butylamin. Bevorzugt sind hierbei Verbindungen der Formel (I) 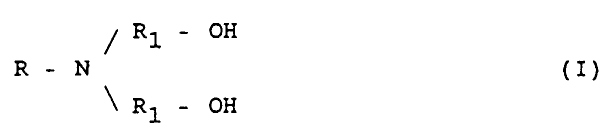 in der bedeuten
- R =: Wasserstoff; unverzweigter oder verzweigter Alkylrest mit 1 bis 18, vorzugsweise 1 bis 4 C-Atomen; cycloaliphatischer Alkylrest mit 5 bis 12, vorzugsweise 5 bis 8 C-Atomen oder gleich -R₁OH;
- R₁ =: unverzweigter oder verzweigter Alkylenrest mit 2 bis 6, vorzugsweise 2 oder 3 C-Atomen, der zusätzlich Substituenten -OR₂ tragen kann, wobei R₂ = R₁ oder ein subst. oder unsubst. aromatischer Ring bedeutet.

Besonders bevorzugte Vertreter dieser Formel (I) sind Triisopropanolamin und/oder Triethanolamin.

Diese Katalysatoren werden im allgemeinen in Mengen von 0,01 bis 1 %, vorzugsweise 0,05 bis 2 %, bezogen auf die Summe von B₁₎ und B₂₎, eingesetzt.

Die Reaktionsprodukte aus B1), B2) und ggf. B3) können auch in Abmischung mit den bekannten Epoxidharzen, z.B. auf Basis von Bisphenol-A oder Bisphenol-F verwendet werden.

Als Komponente C) können die auf dem Pulverlacksektor üblichen Zusatzstoffe verwendet werden, wie Verlaufmittel (Flußregelungsmittel), Farbstoffe, Pigmente, Füllstoffe, Stabilisatoren, Katalysatoren zur Beschleunigung der Vernetzungsreaktion, Weichmacher, zusätzliche Härter, zusätzliche härtbare Harze und dgl.. Diese Zusatzstoffe werden im allgemeinen in Mengen von 0 bis 50, vorzugsweise 0,1 bis 40 Gew.-%, bezogen auf die Gesamtpulverlack-Mischung, eingesetzt. Evtl. flüssige oder pastöse Zusatzstoffe können dabei u.a. in Mischung mit hochaktiver Kieselsäure als Master Batch (siehe DE 2 202 907) zur Anwendung kommen.

Als Katalysatoren für eine beschleunigte Reaktion zwischen den Carboxylgruppen der Komponente A) und den Epoxidgruppen der Komponente B) kommen beispielsweise in Betracht: Zinknaphthenat und-octoat, Zinnoctoat, Dibutylzinndilaurat, Lithiumbenzoat und -hydroxyd, Zinn- und Zinkchlorid, Titan-, Vanadin- und Zirkonalkoholate, Metallsalze von organischen Carbonsäuren, quaternäre Ammonium- und Phosphoniumsalze, Salze der Phosphorsäure, Amine und Amidine, Phosphine, substituierte und nicht substituierte Harnstoffe und Polyharnstoffe, Pyrazolone, Pyrimidine, Imidazol und dessen Derivate. Die Menge an derartigen Katalysatoren liegt zumeist bei 0,05 bis 5, vorzugsweise bei 0,1 bis 2 Gew.-%, bezogen auf den Polyester A).

Verlaufsmittel auf Basis von handelsüblichen Acrylat-Oligomeren können im Bereich von 0,1 - 4 Gew.-%, vorzugsweise 0,5 - 2,0 Gew.-%, bezogen auf Komponente B) zugesetzt werden.

Stabilisatoren sind z.B. aromatische Diketone wie Benzoin, die punktuelle Zersetzungen unterbinden und damit die Porenbildung herabdrücken. Diese werden im allgemeinen in Mengen von 0,1 bis 3, vorzugsweise von 0,2 bis 2 Gew.-%, bezogen auf das gesamte Bindemittel (Komponenten A) und B)), eingesetzt.

Als Farbstoffe bzw. Pigmente, die anorganischer oder organischer Natur sein können, seien beispielsweise Titandioxid und Zinkoxid genannt. Die organischen Farbstoffe/Pigmente sind naturgemäß so auszuwählen, daß sie bei den Härtungstemperaturen stabil sind und zu keinen untolerierbaren Farbtonverschiebungen führen.

Geeignete Füllstoffe sind z.B. Quarzmehl, Silikate, Kreide, Gips und dergleichen.

Zur Herstellung der erfindungsgemäßen, härtbaren Mischungen werden die Komponenten A), B) und gegebenenfalls C) zunächst gemischt und in der Schmelze homogenisiert. Dies kann in geeigneten Aggregaten, z.B. beheizbaren Knetern, Doppel-Z-Mischern, Extrudern, vorzugsweise durch letztere, erfolgen, wobei die Extrusionstemperatur so zu wählen ist, daß ein Maximum an Scherkraft auf die Mischung einwirkt. Dabei sollte eine Temperaturobergrenze von 140°C nicht überschritten werden. Bei Einsatz von Katalysatoren kann es zweckmäßig sein, diese der Komponente A) oder B) zuzusetzen. Dies kann beispielsweise auch bei der Herstellung der Komponente B) erfolgen.

Die homogenisierte Masse wird dann nach Abkühlen auf Raumtemperatur und nach einer geeigneten Vorzerkleinerung zu einer härtbaren pulverförmigen Mischung (Pulverlack) gemahlen, wobei je nach dem Verwendungszweck mittlere Teilchengrößen von ca. 40 bis 90 µm, vorzugsweise jedoch ca. 50 µm, angestrebt werden. Ein eventuell vorhandener Grobkornanteil von Teilchengröße von mehr als 90 µm wird durch Absieben entfernt.

Das Auftragen der so hergestellten Pulverlacke auf geeignete Substrate, wie z,B. Metall, Holz, Glas, Beton, Kunststoff, Keramik, kann nach den bekannten Verfahren, z.B. durch elektrostatisches Pulversprühen, Wirbelsintern, elektrostatisches Wirbelsintern sowie im Flammsprühverfahren erfolgen.

Nach dem Auftragen des Pulverlackes nach einem der genannten Verfahren werden die beschichteten Werkstücke zur Aushärtung auf eine Temperatur von 140 bis 220°C, vorzugsweise 160 bis 210°C, für eine zum Aushärten ausreichende Zeit, im allgemeinen 10 bis 60 Minuten, erhitzt. Die so erhaltenen Beschichtungen zeichnen sich durch gute lacktechnische Eigenschaften, wie gute mechanische Eigenschaften, gute chemische Beständigkeit, gute Wetterbeständigkeit, gute Haftung etc. aus. Die erfindungsgemäßen Pulverlacke eignen sich daher insbesondere zum Beschichten von hitzebeständigen Materialien, wie z.B. Metall, Glas und Keramik.

### Beispiele

### Carboxylpolyester (A)

Die eingesetzten verzweigten Carboxylpolyester-Harze sind durch die Kenndaten in Tabelle 1 charakterisiert.

### Epoxidharze (B)

### Epoxidharz I (Vergleich)

Handelsübliches Bisphenol-A-Epoxidharz für die Herstellung von Pulverlacken mit folgenden Kenndaten:

| | |
|---|---|
| Epoxidäquivalent | ca. 800 |
| Viskosität 25°C | ca. 500 mPa.s |
| 40 %ig in Butyldiglykol | |
| n. DIN 53015 | |
| Schmelzpunkt | ca. 70°C |
| Kapillarmethode nach | |
| DIN 53015 | |
| Glasübergangstemperatur | ca. 50°C |

### Epoxidharz II

### Herstellung

768 g eines flüssigen Bisphenol-A-Epoxidharzes mit einem Epoxidäquivalent von 183 (4,20 Val) und 232 g Terephthalsäure (1,40 Mol) wurden in einem Vierhalskolben unter Rühren und Stickstoffatmosphäre auf 150°C erwärmt, mit 1 g Triethanolamin versetzt und weiter bei 150°C gehalten. Nach 6 Stunden lag die Säurezahl bei 18 mg KOH/g, nach insgesamt 12 Stunden Reaktionszeit wurde eine Säurezahl von 10 mg KOH/g gefunden und die Reaktion durch Entleeren des Kolbens abgebrochen.

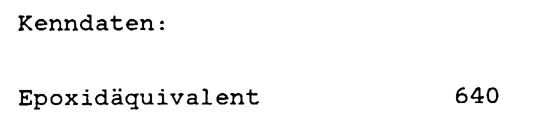

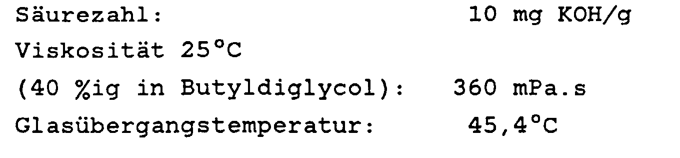

### Epoxidharz III

### Herstellung

1586 g eines flüssigen Bisphenol-A-Epoxidharzes mit einem Epoxidäquivalent von 183 (8,67 Val) und 360 g Terephthalsäure (4,34 Val) wurden in einem Vierhalskolben unter Rühren und Stickstoffatmosphäre auf 170°C erwärmt, mit 2 g Triethanolamin versetzt und weiter bei 170°C gehalten. Nach 5 Stunden lag die Säurezahl bei 0,3 mg KOH/g und das Epoxidäquivalent bei 463. Nun wurde das Reaktionsprodukt auf 140°C abgekühlt und 54 g Bernsteinsäureanhydrid (0,54 Mol) zugegeben. Die Temperatur wurde weiter bei 140 °C gehalten. Die Säurezahl betrug nach 1,5 Stunden Reaktionszeit 0,5 mg KOH/g. Nach weiteren 0,5 Stunden wurde die Umsetzung durch Entleeren des Kolbens beendet.

| Kenndaten: | |
|---|---|
| Epoxidäquivalent: | 555 |
| Säurezahl (Toluol/Ethanol) | 0,2 mg KOH/g |
| Viskosität 25°C: | |
| (40 % in Butyldiglykol) | 411 mPa.s |
| Glasübergangstemperatur | 40,0°C |

### Epoxidharz IV

### Herstellung

1552 g eines flüssigen Bisphenol-A-Epoxidharzes mit einem Epoxidäquivalent von 183 (8,48 Val) und 352 g Terephthalsäure (4,24 Val) wurden in einem Vierhalskolben unter Rühren und Stickstoffatmosphäre auf 170°C erwärmt, mit 2 g Triethanolamin versetzt und weiter bei 170°C gehalten. Nach 4 Stunden lag die Säurezahl bei 0,6 mg KOH/g und das Epoxidäquivalent bei 459. Nun wurde das Reaktionsprodukt auf 140°C gekühlt und 97 g Tetrahydrophthalsäureanhydrid (0,64 Mol) zugegeben. Die Temperatur wurde weiter bei 140°C gehalten. Die Säurezahl betrug nach 1,5 Stunden 1,4 mg KOH/g. Nach einer weiteren Stunde wurde die Umsetzung durch Entleeren des Kolbens beendet.

| Kenndaten: | |
|---|---|
| Epoxidäquivalent: | 582 |
| Säurezahl (Toluol/Ethanol) | 0,5 mg KOH/g |
| Viskosität 25°C: | |
| (40 % in Butyldiglykol) | 541 mPa.s |
| Glasübergangstemperatur: | 43,4°C |

### Epoxidharz V

### Herstellung

1550 g eines flüssigen Bisphenol-A-Epoxidharzes mit einem Epoxidäquivalent von 183 (8,47 Val) und 380 g Terephthalsäure (4,58 Val) wurden in einem Vierhalskolben unter Rühren und Stickstoffatmosphäre auf 170°C erwärmt, mit 2 g Triethanolamin versetzt und weiter bei 170°C gehalten.

Nach 5 Std. lag die Säurezahl bei 0,4 mg KOH/g und das Epoxidäquivalent bei 503. Nun wurde das Reaktionsprodukt auf 140°C abgekühlt und 70 g Tetrahydrophthalsäureanhydrid (0,46 Mol) zugegeben. Die Temperatur wurde weiter bei 140°C gehalten. Die Säurezahl betrug nach 1 Stunde Reaktionszeit 1,9 mg KOH/g. Nach einer weiteren Stunden wurde die Umsetzung durch Entleeren des Kolbens beendet.

| Kenndaten: | |
|---|---|
| Epoxidäquivalent: | 613 |
| Säurezahl (Toluol/Ethanol) | 0,6 mg KOH/g |
| Viskosität 25°C: | 491 mPa.s |
| Glasübergangstemperatur: | 47,7°C |

### Epoxidharz VI

### Herstellung

1553 g eines flüssigen Bisphenol-A-Epoxidharzes mit einem Epoxidäquivalent von 183 (8,49 Val) und 352 g Terephthalsäure (4,24 Val) wurden in einem Vierhalskolben unter Rühren und Stickstoffatmosphäre auf 170 °C erwärmt, mit 2 g Triethanolamin versetzt und weiter bei 170 °C gehalten. Nach 5 Std. lag die Säurezahl bei 0,6 mg KOH/g und das Epoxidäquivalent bei 456. Nun wurde das Reaktionsprodukt auf 140 °C abgekühlt und 94 g Phthalsäureanhydrid (0,64 Mol) zugegeben. Die Temperatur wurde weiter bei 140 °C gehalten. Die Säurezahl betrug nach 1 Stunde Reaktionszeit 1,0 mg KOH/g. Nach einer weiteren Stunde wurde die Umsetzung durch Entleeren des Kolbens beendet.

| Kenndaten: | |
|---|---|
| Epoxidäquivalent: | 586 |
| Säurezahl (Toluol/Ethanol) | 0,7 mg KOH/g |
| Viskosität 25 °C | 638 mPa.s |
| Glasübergangstemperatur | 45,9 °C |

### Epoxidharz VII

### Herstellung

1536 g eines flüssigen Bisphenol-A-Epoxidharzes mit einem Epoxidäquivalent von 183 (8,54 Val) und 355 g Terephthalsäure (4,27 Val) wurden in einem Vierhalskolben unter Rühren und Stickstoffatmosphäre auf 170 °C erwärmt, mit 2 g Triethanolamin versetzt und weiter bei 170 °C gehalten. Nach 5 Stunden lag die Säurezahl bei 0,5 mg KOH/g und das Epoxidäquivalent bei 460. Nun wurde das Reaktionsprodukt auf 140 °C abgekühlt und 82 g Hexahydrophthalsäureanhydrid (0,53 Mol) zugegeben. Die Temperatur wurde weiter bei 140 °C gehalten. Die Säurezahl betrug nach 1 Stunde Reaktionszeit 1,8 mg KOH/g. Nach einer weiteren Stunde wurde die Umsetzung durch Entleeren des Kolbens beendet.

| Kenndaten: | |
|---|---|
| Epoxidäquivalent | 564 |
| Säurezahl (Toluol/Ethanol) | 0,5 mg KOH/g |
| Viskosität 25 °C | 380 mPa.s |
| Glasübergangstemperatur | 42,2 °C |

Die in den Tabellen 3a/3b angegebenen geprüften Pulverlacke wurden durch Extrudieren der Pulverlackmischungen aus Carboxylpolyester, Epoxidharz, Pigment und Zusatzstoffen in dem in den Tabellen 2a/2b angeführten Mischungsverhältnis hergestellt und sind hinsichtlich des Herstellungsverfahrens und der Teilchengrößenverteilung (mittlere Teilchengröße 50 µm) untereinander vergleichbar. Die extrudierten Pulverlackmischungen wurden mit einer Corona-Sprühpistole auf entfettete Stahlbleche aufgebracht. Die Schichtstärke betrug 50-55 µm und die Einbrenntemperatur 190 bzw. 200°C (siehe Tabellen 3a/3b). Die Prüfungen wurden nach den angegebenen Normen durchgeführt.

Die Vergilbungsneigung wurde in der Weise ermittelt, daß die lackierten Bleche mit den eingebrannten Filmen geteilt und eine Hälfte bei 220°C 30 Minuten überbrannt wurde.

Die ΔE - Farbdifferenzmessung erfolgte an einem Farbmeßgerät Tricolor LFM 3 der Fa. Lange nach DIN 6174, CIE-LAB 1976 an den überbrannten Lackfilmen gegen den nicht überbrannten Filmteil.

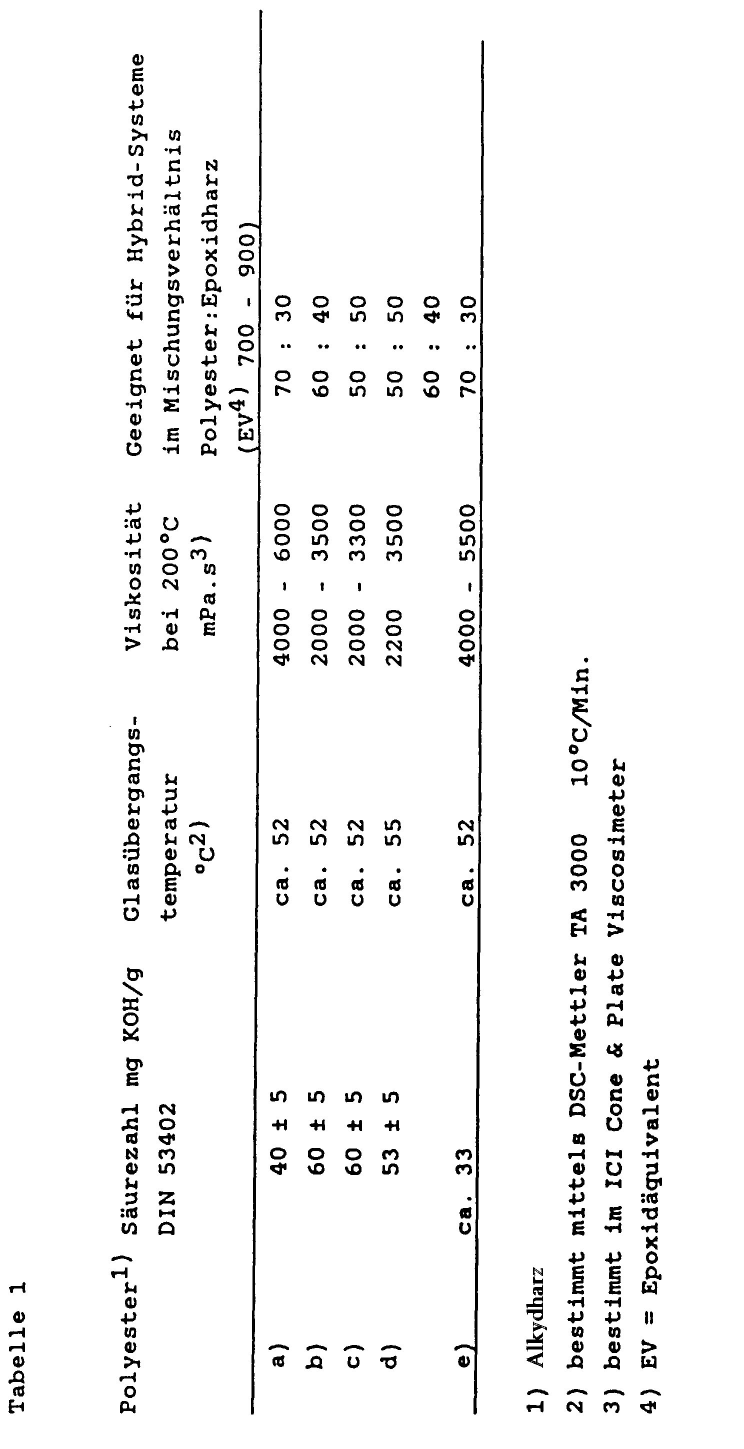

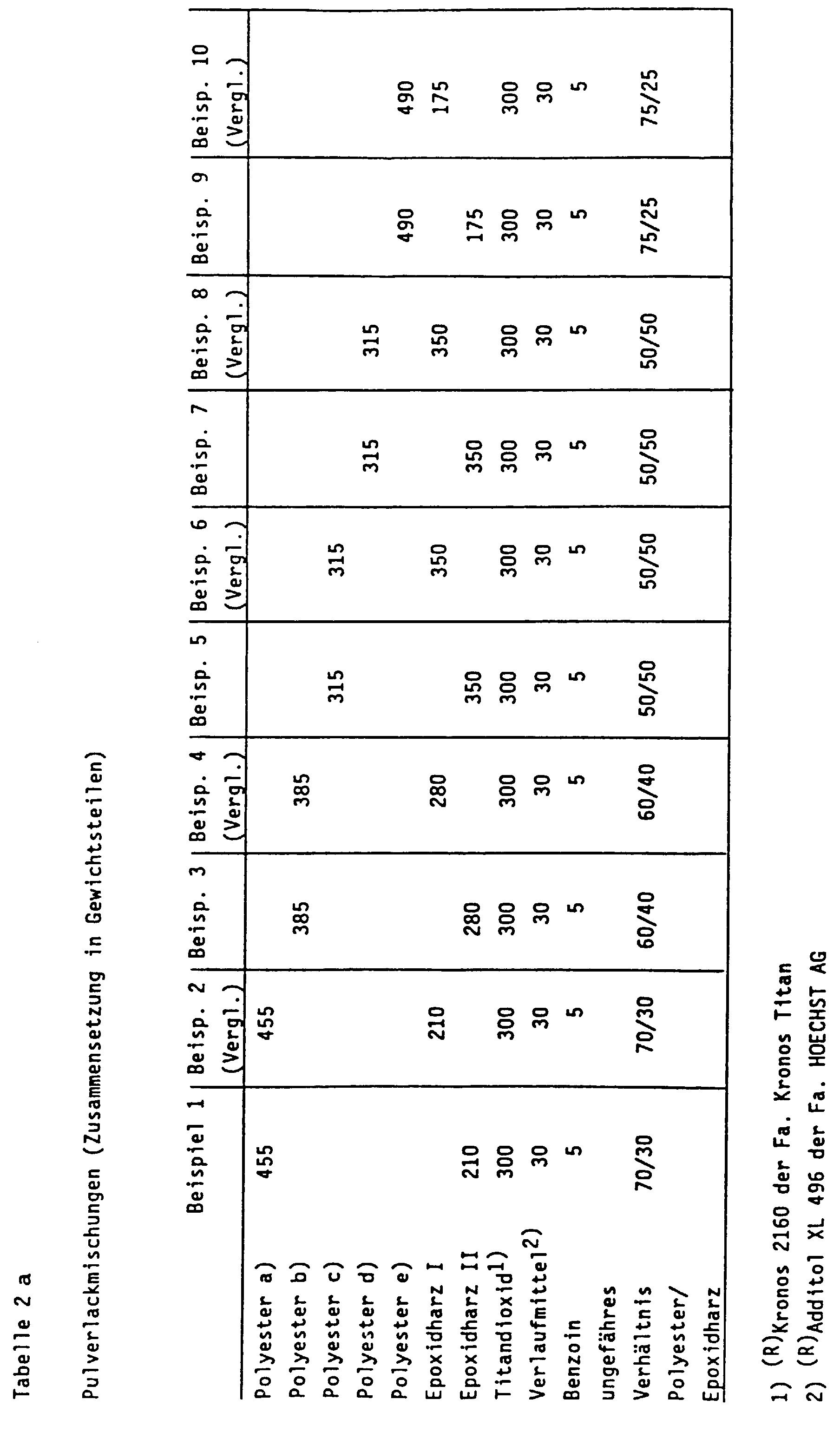

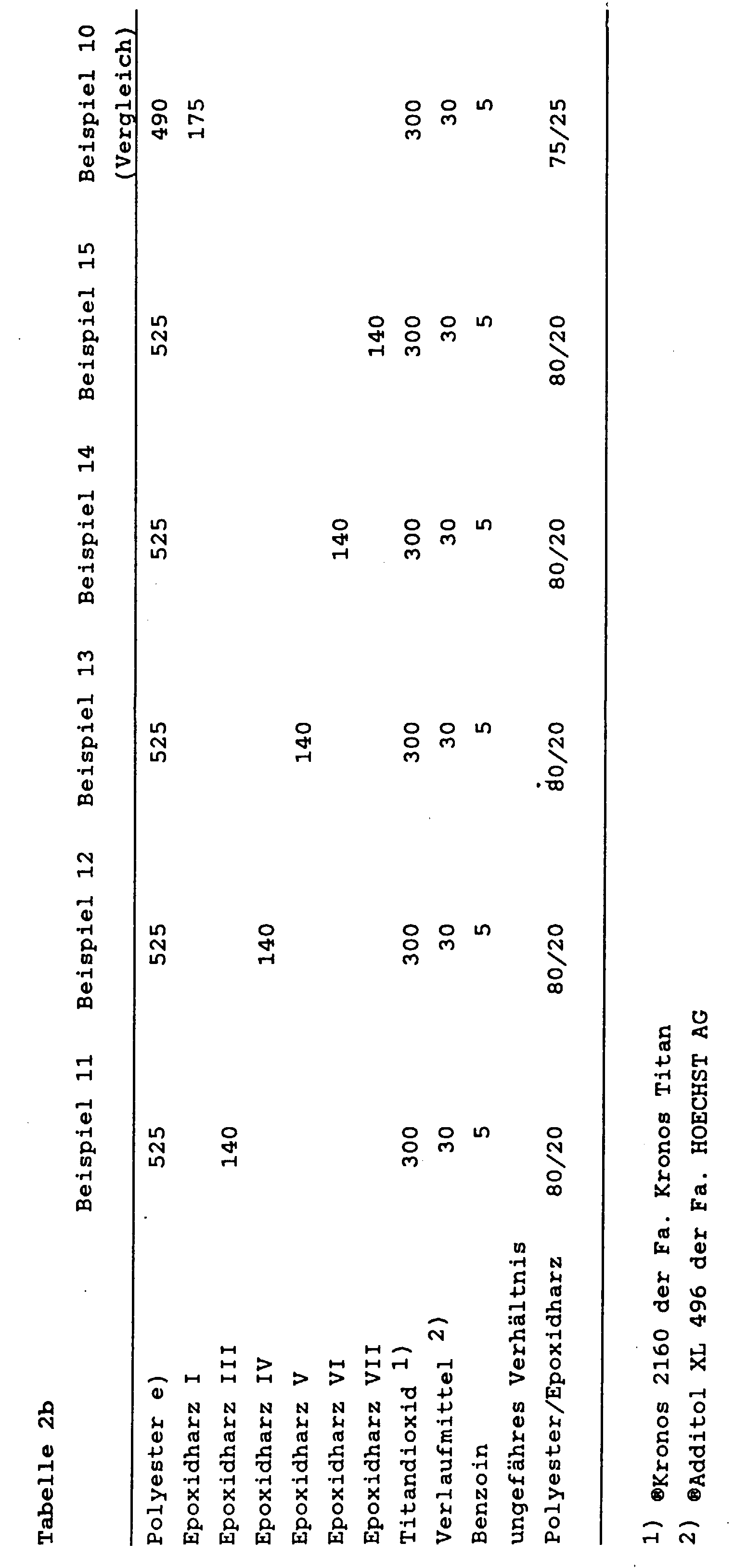

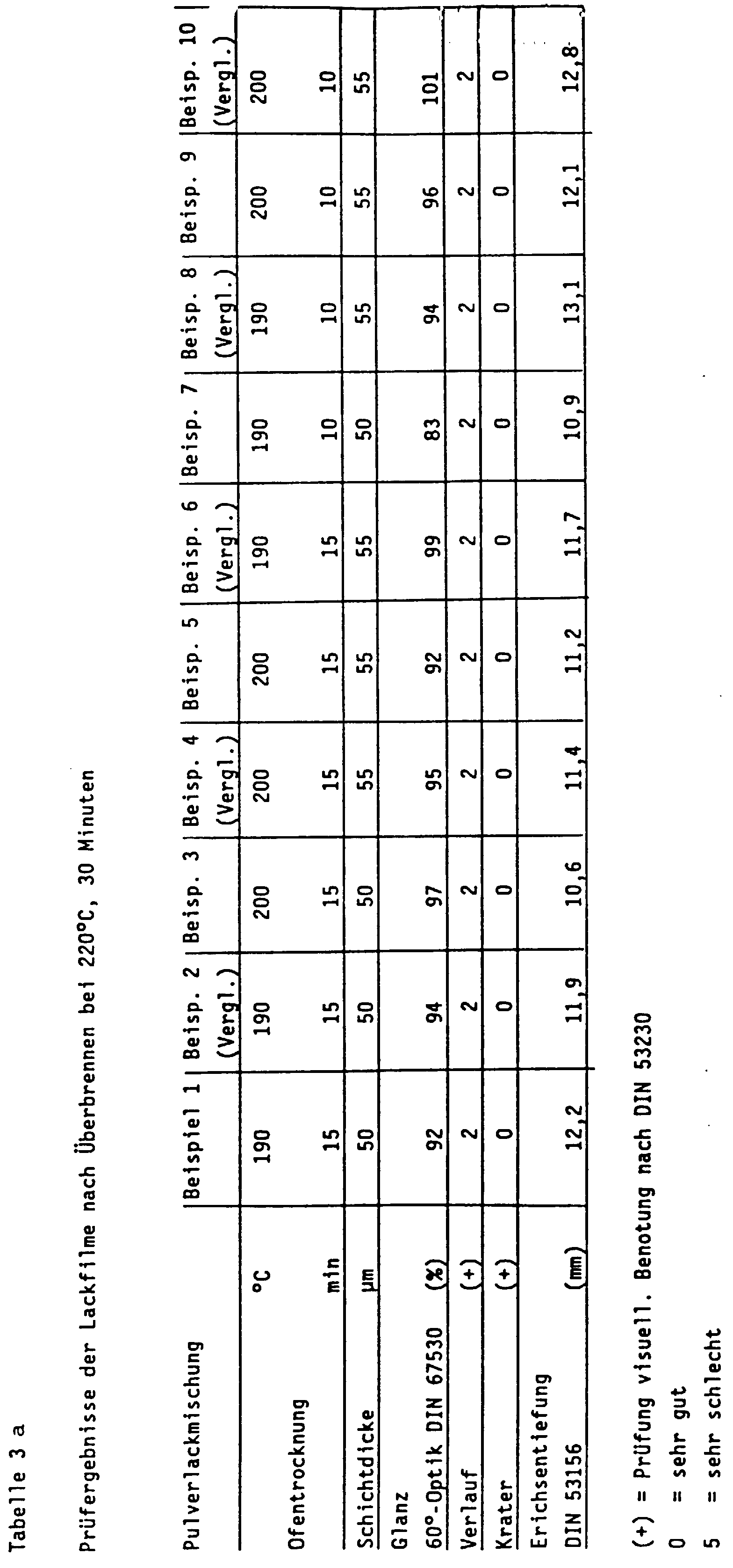

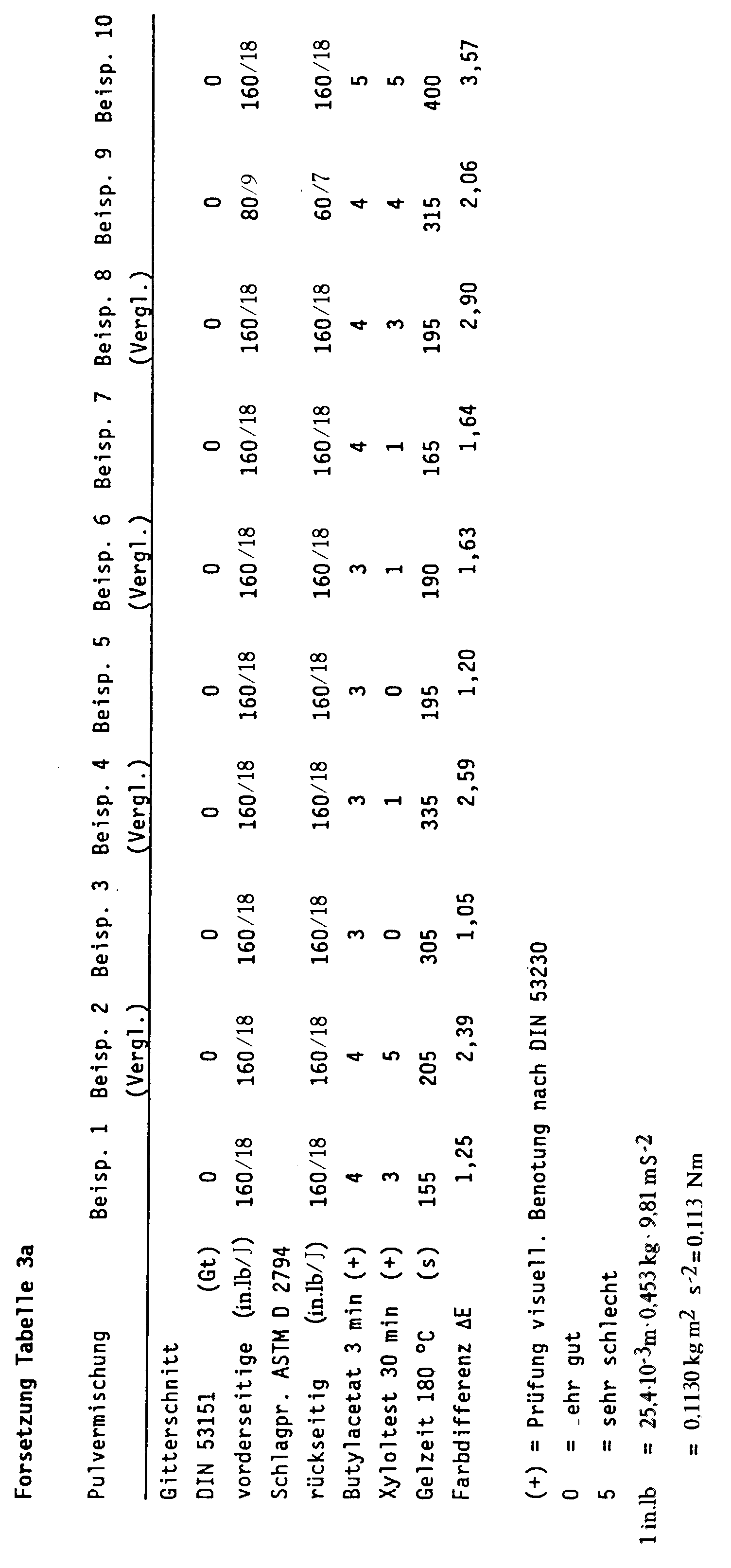

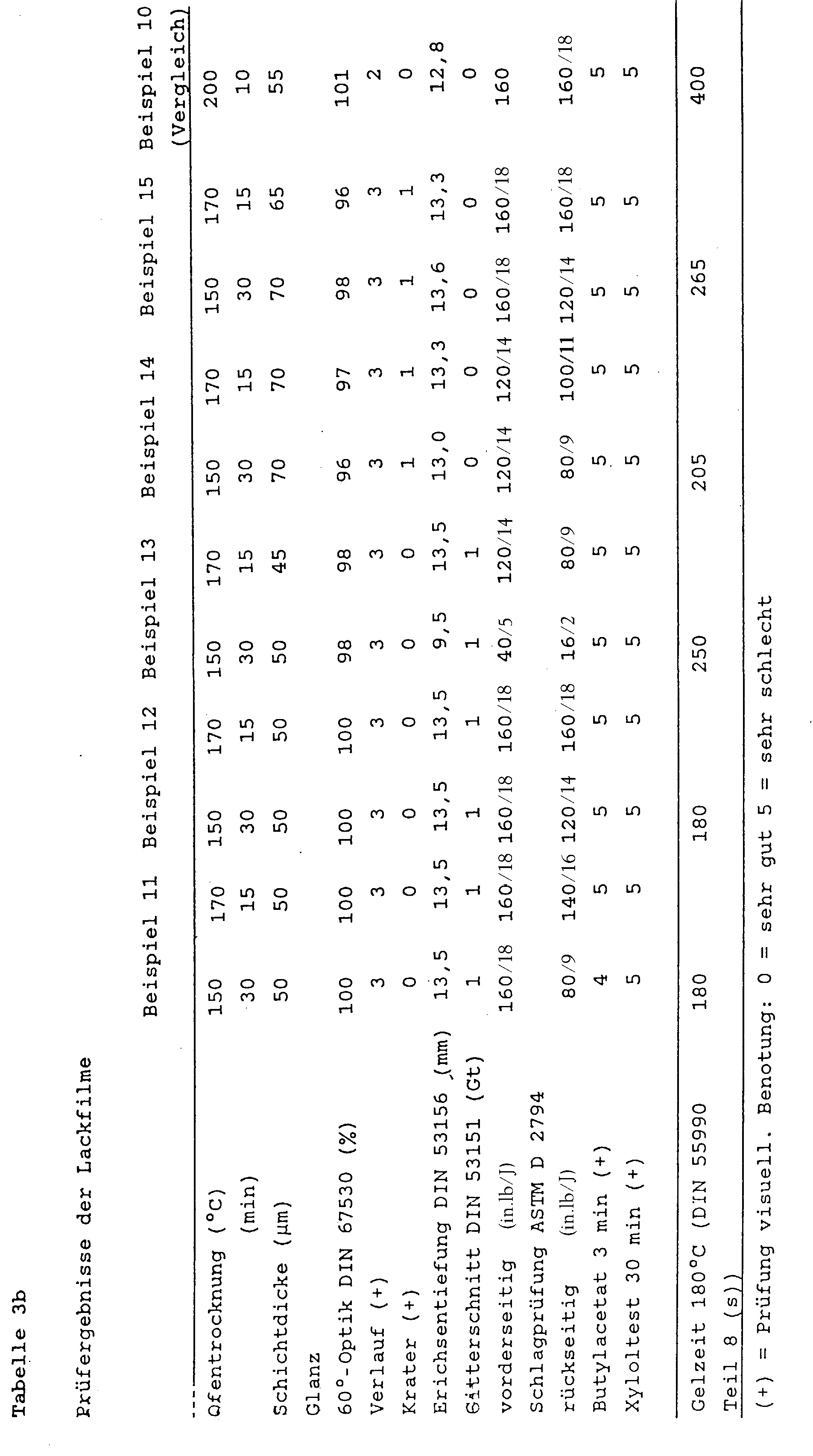

Aus der Tabelle 3a ist zu entnehmen, daß die Pulverlackfilme aus den erfindungsgemäßen und den Vergleichs-Pulverlackmischungen in Prüfungen wie Erichsentiefung, Schlagprüfung, Glanz, Verlauf, Lösungsmittelbeständigkeit u.a. vergleichbare Werte liefern. Aus den erfindungsgemäßen Pulverlackmischungen werden aber überraschenderweise Lackfilme mit einer verbesserten Vergilbungsbeständigkeit erhalten. Die erfindungsgemäßen Mischungen zeigen nach dem Überbrennen der Lackfilme deutlich niedrigere ΔE-Werte, also keine Vergilbung wie die Filme der Pulverlackmischungen gemäß Stand der Technik.

Aus der Tabelle 3b ist an den erfindungsgemäßen Beispielen 11 bis 15 zu ersehen, daß diese Pulverlackmischungen überraschenderweise eine wesentlich höhere Reaktivität (niedrigere Gelzeiten) aufweisen als solche nach dem Stand der Technik.

Darüber hinaus ergibt sich aus der Tabelle 3b, daß die Pulverlackfilme aus den erfindungsgemäßen Pulverlackmischungen und der Vergleichs-Pulverlackmischung in Prüfungen wie Erichsentiefung, Schlagprüfung, Glanz, Verlauf, Lösungsmittelbeständigkeit u.a. vergleichbare Werte liefern. Überraschenderweise wurde aber gefunden, daß die erfindungsgemäßen Epoxidharze III-VII in Pulverlackmischungen von 80 Teilen Polyesterharz mit 20 Teilen Epoxidharz eingesetzt und bei deutlich niedrigeren Temperaturen als die Vergleichsmischung eingebrannt werden können.

## Patentansprüche

1. Härtbare, pulverförmige Mischungen aus
(A) Carboxylgruppen enthaltenden Polyestern,
(B) Verbindungen, die mindestens zwei 1,2-Epoxidgruppen enthalten, die Umsetzungsprodukte sind aus
(B1) Verbindungen, die mindestens zwei 1,2-Epoxid-Gruppen im Molekül enthalten, die ausgewählt sind aus Polyglycidyläthern von mehrwertigen Alkoholen, Polyepoxidverbindungen auf Basis mehrwertiger Phenole und Polyglycidylestern von Polycarbonsäuren mit mindestens zwei Carboxylgruppen, wobei die Carboxylgruppen der Polycarbonsäuren mit einem linearen oder verzweigten, gesättigten oder ungesättigten Kohlenwasserstoffrest mit bis zu 40 Kohlenstoffatomen verbunden sind, und deren Epoxid-Äquivalentmasse zwischen 160 und 600 g/mol liegt, und
(B2) aromatischen Dicarbonsäuren oder deren Mischung mit Verbindungen aus der Gruppe der (cyclo)aliphatischen Dicarbonsäuren, Monocarbonsäuren und einwertigen Phenole, und
(B3) gegebenenfalls cyclischen Anhydriden, sowie
(C) gegebenenfalls weiteren Zusätzen.

2. Härtbare Mischungen nach Anspruch 1, dadurch gekennzeichnet, daß die Masse von (A) 50 bis 90 % der Summe der Massen von (A) und (B) beträgt.

3. Härtbare Mischungen nach Anspruch 1, dadurch gekennzeichnet, daß die Säurezahl der Komponente (A) 15 bis 150 mg KOH/g beträgt.

4. Härtbare Mischungen nach mindestens einem der Ansprüche 1 bis 3, dadurch gekennzeichnet, daß die zahlenmittlere Molmasse von (A) zwischen 600 und 12000 g/mol liegt.

5. Härtbare Mischungen nach mindestens einem der Ansprüche 1 bis 4, dadurch gekennzeichnet, daß die Epoxid-Äquivalentmasse von (B) zwischen 300 und 1200 g/mol liegt.

6. Härtbare Mischungen nach mindestens einem der Ansprüche 1 bis 5, dadurch gekennzeichnet, daß die Komponente (B) eine Säurezahl zwischen 0,01 und 20 mg KOH/g aufweist.

7. Härtbare Mischungen nach mindestens einem der Ansprüche 1 bis 6, dadurch gekennzeichnet, daß die Glastemperatur der Komponenten (A) und (B) mindestens 35 °C beträgt.

8. Härtbare Mischungen nach mindestens einem der Ansprüche 1 bis 7, dadurch gekennzeichnet, daß die Epoxid-Äquivalentmasse der Komponente (B1) zwischen 160 und 200 g/mol liegt.

9. Härtbare Mischungen nach mindestens einem der Ansprüche 1 bis 8, dadurch gekennzeichnet, daß die Komponente (B2) als aromatische Dicarbonsäure Terephthalsäure enthält.

10. Härtbare Mischungen nach mindestens einem der Ansprüche 1 bis 9, dadurch gekennzeichnet, daß die (cyclo)aliphatischen Carbonsäuren in der Komponente (B2) 2 bis 12, bevorzugt 6 bis 8 C-Atome enthalten.

11. Härtbare Mischungen nach mindestens einem der Ansprüche 1 bis 10, dadurch gekennzeichnet, daß pro 1 mol Reaktionsprodukt aus (B1) und (B2) 0,01 bis 1 mol des cyclischen Anhydrids (B3) eingesetzt werden.

12. Härtbare Mischungen nach mindestens einem der Ansprüche 1 bis 11, dadurch gekennzeichnet, daß als cyclische Anhydride (B3) solche aus der Gruppe Bernsteinsäureanhydrid, Phthalsäureanhydrid, Δ⁴-Tetrahydrophthalsäureanhydrid und Hexahydrophthalsäureanhydrid eingesetzt werden.

13. Substrat, beschichtet mit den härtbaren Mischungen nach mindestens einem der Ansprüche 1 bis 12.

14. Verwendung der härtbaren Mischung nach Anspruch 1 zum Beschichten von Substraten.

## Claims

1. Curable pulverulent mixtures comprising
(A) carboxyl-containing polyesters
(B) compounds containing at least two 1,2-epoxide groups, which groups are reaction products of
(B1) compounds which contain at least two 1,2-epoxide groups per molecule, said groups being selected from among polyglycidyl ethers of polyhydric alcohols, polyepoxide compounds based on polyvalent phenols and polyglycidyl esters of polycarboxylic acids having at least two carboxyl groups, the carboxyl groups of the polycarboxylic acids being linked to a linear or branched, saturated or unsaturated hydrocarbon radical having up to 40 carbon atoms, and the epoxide equivalent mass of said groups being between 160 and 600 g/mol, and
(B2) aromatic dicarboxylic acids or mixtures thereof with compounds selected from the group comprising (cyclo)aliphatic dicarboxylic acids, monocarboxylic acids and monovalent phenols, and
(B3) cyclic anhydrides, if appropriate and
(c) further additives, if appropriate.

2. Curable mixtures as claimed in claim 1, wherein the amount of A) is 50 to 90 % by weight, based on the sum total of A) and B).

3. Curable mixtures as claimed in claim 1, wherein the acid number of the component A) is 15 to 150 mg of KOH/g.

4. Curable mixtures as claimed in at least one of claims 1 to 3, wherein the number avearge molar mass of A) is between 600 and 1200 g/mol.

5. Curable mixtures as claimed in at least one of claims 1 to 4, wherein the component B) has an epoxide equivalent mass of 300 to 1200 g/mol.

6. Curable mixtures as claimed in at least one of claims 1 to 5, wherein the component B) has an acid number of 0.01 to 20 mg of KOH/g.

7. Curable mixtures as claimed in at least one of claims 1 to 6, wherein the glass temperature of components A) and B) is at least 35 °C.

8. Curable mixtures as claimed in at least one of claims 1 to 7, wherein the component (B1) has an epoxide equivalent mass of 169 to 200 g/mol.

9. Curable mixtures as claimed in at least one of claims 1 to 8, wherein the component (B2) comprises terephthalic acid as the aromatic dicarboxylic acid.

10. Curable mixtures as claimed in at least one of claims 1 to 9, wherein the (cyclo)aliphatic carboxylic acids contained in component (B2) have 2 to 12 carbon atoms, preferably 6 to 8 carbon atoms.

11. Curable mixtures as claimed in at least one of claims 1 to 10, wherein 0.01 to 1 mol of the cyclic anhydride (B3) is used per 1 mol of the reaction product obtained from (B1) and (B2).

12. Curable mixtures as claimed in at least one of claims 1 to 11, wherein cyclic anhydride chosen from the group succinic anhydride, phthalic anhydride, Δ⁴-tetrahydrophthalic anhydride and hexahydrophthalic anhydride are employed as the cyclic anhydrides (B3).

13. A substrate coated with the curable mixtures as claimed in at least one of claims 1 to 12.

14. Use of the curable mixture as claimed in claim 1, for coating substrates.

## Revendications

1. Mélanges pulvérulents durcissables constitués de
(A) Polyesters contenant des groupes carboxyles,
(B) Composés contenant au moins deux groupes 1,2-époxy, qui sont des produits de réaction
(B1) de composés contenant dans la molécule au moins deux groupes 1,2-époxyde pris dans le groupe comportant des éthers polyglycidyliques des alcools multifonctionnels, des composés polyépoxydes à base de phénols polyhydroxyliques et des esters polyglycidyliques des acides poly-carboxyliques avec au moins deux groupes carboxyles, les groupes carboxyles des acides polycarboxyliques étant liés à un radical hydrocarboné linéaire ou ramifié, saturé ou insaturé avec jusqu'à 40 atomes de carbone, et leur poids équivalent d'époxyde est compris entre 160 et 600 g/mole,
et
(B2) d'acides dicarboxyliques aromatiques ou de leurs mélanges avec des composés pris dans le groupe des phénols mono-fonctionnels, des acides mono-carboxyliques et des acides dicarboxyliques (cyclo)aliphatiques,
et
(B3) éventuellement d'anhydrides cycliques, ainsi que
(C) éventuellement d'autres additifs.

2. Mélanges durcissables selon la revendication 1, caractérisés en ce que le poids de (A) est de 50 à 90% de la somme des poids de (A) et de (B).

3. Mélanges durcissables selon la revendication 1, caractérisé en ce que l'indice d'acide du composant (A) est de 15 à 150 mg de KOH/g.

4. Mélanges durcissables selon au moins l'une des revendications 1 à 3, caractérisés en ce que la masse moléculaire moyenne en nombre de (A) est comprise entre 600 et 12 000 g/mole.

5. Mélanges durcissables selon au moins l'une des revendications 1 à 4, caractérisés en ce que le poids équivalent d'époxyde de (B) est compris entre 300 et 1200 g/mole.

6. Mélanges durcissables selon au moins l'une des revendications 1 à 5, caractérisés en ce que le composant (B) présente un indice d'acide compris entre 0,01 et 20 mg de KOH/g.

7. Mélanges durcissables selon au moins l'une des revendications 1 à 6, caractérisés en ce que la température de transition vitreuse des composants (A) et (B) est d'au moins 35°C.

8. Mélanges durcissables selon au moins l'une des revendications 1 à 7, caractérisés en ce que le poids équivalent d'époxyde du composant (B1) est compris entre 160 et 200 g/mole.

9. Mélanges durcissables selon au moins l'une des revendications 1 à 8, caractérisés en ce que le composant (B2) contient l'acide téréphtalique en tant qu'acide dicarboxylique aromatique.

10. Mélanges durcissables selon au moins l'une des revendications 1 à 9, caractérisés en ce que les acides carboxyliques (cyclo)aliphatiques dans les composants (B2) comportent de 2 à 12, de préférence de 6 à 8 atomes de carbone.

11. Mélanges durcissables selon au moins l'une des revendications 1 à 10, caractérisés en ce que l'on utilise par mole de produit réactionnel à partir de (B1) et de (B2), de 0,01 à 1 mole de l'anhydride cyclique (B3).

12. Mélanges durcissables selon au moins l'une des revendications 1 à 11, caractérisés en ce que l'on utilise en tant qu'anhydrides cycliques (B3) ceux pris dans le groupe comportant l'anhydride de l'acide succinique, l'anhydride de l'acide phtalique, l'anhydride de l'acide Δ⁴-tétrahydrophtalique et l'anhydride de l'acide hexahydrophtalique.

13. Substrat revêtu des mélanges durcissables selon au moins l'une des revendications 1 à 12.

14. Utilisation des mélanges durcissables selon la revendication 1 pour le revêtement de substrats.
